# DEMANDE DE BREVET EUROPEEN

(11) **EP 4 576 550 A1**
(43) Date de publication de la demande: **25.06.2025**
(21) Numéro de dépôt: 24221854.3
(22) Date de dépôt: 19.12.2024
(51) Int. Cl.: H02M 7/483, H02M 3/335, H02M 7/49, B60L 1/00, H02M 1/10

(54) **ENSEMBLE POUR L'ALIMENTATION D'UNE MACHINE ÉLECTRIQUE TOURNANTE**

(30) Priorité: 21.12.2023 FR 2314953
(71) Demandeur: Valeo eAutomotive Germany GmbH, 91056 Erlangen (DE)
(72) Inventeur: NIKOLIC, David, 95892 Cergy Pontoise (FR); NICOT, Erwan, 95892 Cergy Pontoise (FR); PELLIER, Francois, 95892 Cergy Pontoise (FR)
(74) Mandataire: Valeo Powertrain Systems

(57) **Abrégé**

Ensemble (103) pour l'alimentation d'une machine électrique tournante de propulsion (102) d'un véhicule comprenant :
- au moins une chaine (30) de modules (10) comprenant une première borne (37a) et une deuxième borne (37b) chaque module (10) comprenant :
- une borne primaire (11a) et une borne secondaire (11b), la borne primaire (11a) étant connectée à la borne secondaire (11b) d'un autre module (10) et/ou la borne secondaire (11b) est connectée à la borne primaire (11a) d'un autre module (10),
- une unité de stockage d'énergie électrique (12),
- un pont de commutation en H (13), comprenant des interrupteurs pilotables (14a, 14b, 14c, 14d), chaque point milieu du pont étant connecté à l'une des bornes (11a, 11b) du module (10), l'unité de stockage d'énergie électrique (12) étant disposée dans une branche en parallèle des bras de commutation, et
- au moins un module (10) comprenant un convertisseur DC/DC (15), comprenant des interrupteurs pilotables, connecté d'une part aux bornes de l'unité de stockage d'énergie électrique (12) et d'autre part à une borne tertiaire (16a) et à une borne quaternaire (16b) du module (10),

- un premier et un deuxième bus d'alimentation (110, 112), destinés à être connectés à un consommateur électrique et/ou une unité de stockage d'énergie électrique respectif,
chaque chaîne comprenant au moins un module (10) ayant ses bornes tertiaires (16a) et quaternaires (16b) connectées au premier bus d'alimentation (110) et au moins un module (10) ayant ses bornes tertiaire (16a) et quaternaire (16b) connectées au deuxième bus d'alimentation (112), les modules (10) de chaque chaîne (30) étant notamment répartis entre des modules (10) ayant leur bornes tertiaire (16a) et quaternaire (16b) connectées au premier bus d'alimentation (110) et des modules (10) ayant leur bornes tertiaire (16a) et quaternaire (16b) connectées au deuxième bus d'alimentation (112),
Caractérisé en ce que au moins un convertisseur DC/DC (15) d'un module (10) de chaque chaîne (30) est un convertisseur isolé et réversible.

## Description

La présente demande se réfère à une chaîne de modules pour un circuit d'alimentation d'une machine électrique tournante de propulsion d'un véhicule.

Dans un exemple connu, notamment de la demande US11799392B2, une telle chaîne de modules comprend une première borne et une deuxième borne, chaque module comprenant :
- une borne primaire et une borne secondaire, la borne primaire étant connectée à la borne secondaire d'un autre module et/ou la borne secondaire est connectée à la borne primaire d'un autre module
- une unité de stockage d'énergie électrique, et
- un pont de commutation en H, le pont comprenant deux bras de commutation comprenant deux interrupteurs pilotables disposés de part et d'autres d'un point milieu, chaque point milieu étant connecté à l'une des bornes du module, l'unité de stockage d'énergie électrique étant disposée dans une branche en parallèle des bras de commutation,
- au moins un module comprenant un convertisseur DC/DC, comprenant des interrupteurs pilotables, connecté d'une part aux bornes de l'unité de stockage d'énergie électrique et d'autre part à une borne tertiaire et à une borne quaternaire du module.

Il peut être souhaitable de piloter intelligemment les interrupteurs au sein des modules afin de s'assurer que la décharge des unités de stockage d'énergie est équitable entre les différents modules. Il existe un besoin de simplifier l'équilibrage de la charge des unités de stockage d'énergie au sein des modules.

Un tel système d'alimentation d'une machine électrique tournante de véhicule est apte à alimenter des consommateurs électriques à basse tension au sein du véhicule grâce à la présence du convertisseur DC/DC dans au moins un des modules. Ces consommateurs pouvant faire partie de systèmes d'aide à la conduite ou permettre la conduite autonome du véhicule, ces consommateurs peuvent nécessiter d'être alimentés par deux sources de tensions isolées l'une de l'autre pour des impératifs de sécurité de l'utilisateur du véhicule.

L'invention vise à répondre à tout ou partie de ces besoins et elle y parvient par un de ses aspects, grâce à un ensemble pour l'alimentation d'une machine électrique tournante de propulsion d'un véhicule comprenant :
- au moins une chaine de modules comprenant une première borne et une deuxième borne chaque module comprenant :
   - une borne primaire et une borne secondaire, la borne primaire étant connectée à la borne secondaire d'un autre module et/ou la borne secondaire est connectée à la borne primaire d'un autre module,
   - une unité de stockage d'énergie électrique,
   - un pont de commutation en H, le pont comprenant deux bras de commutation comprenant deux interrupteurs pilotables disposés de part et d'autres d'un point milieu, chaque point milieu étant connecté à l'une des bornes du module, l'unité de stockage d'énergie électrique étant disposée dans une branche en parallèle des bras de commutation,
   - au moins un module comprenant un convertisseur DC/DC, comprenant des interrupteurs pilotables, connecté d'une part aux bornes de l'unité de stockage d'énergie électrique et d'autre part à une borne tertiaire et à une borne quaternaire du module,
- un premier et un deuxième bus d'alimentation, destinés à être connectés à un consommateur électrique et/ou une unité de stockage d'énergie électrique respectif,

chaque chaîne comprenant au moins un module ayant ses bornes tertiaires et quaternaires connectées au premier bus d'alimentation et au moins un module ayant ses bornes tertiaires et quaternaires connectées au deuxième bus d'alimentation, les modules de chaque chaîne étant notamment répartis entre des modules ayant leur bornes tertiaire et quaternaire connectées au premier bus d'alimentation et des modules ayant leur bornes tertiaire et quaternaire connectées au deuxième bus d'alimentation,
caractérisé en ce que au moins un convertisseur DC/DC d'un module de chaque chaîne est un convertisseur isolé et réversible.

Un convertisseur DC/DC isolé et réversible se présente de façon connue sous la forme d'un circuit présentant un circuit primaire et un circuit secondaire, le circuit primaire et le circuit secondaire présentant au moins un interrupteur pilotable et un enroulement, les enroulements des circuits primaires et secondaires étant couplés de manière à former un transformateur.

Ce convertisseur DC/DC isolé et réversible au sein des modules de l'au moins une chaîne permet, lorsque plusieurs modules sont connectés entre eux par un même bus d'alimentation de pouvoir réaliser un transfert d'énergie entre ces modules. Plus précisément, au moins un module est capable de transférer de l'énergie à au moins un autre module, les convertisseurs DC/DC de ces modules déchargeant et chargeant leur unité de stockage d'énergie électrique respectivement. Ce transfert d'énergie est réalisable notamment entre des modules d'une même chaîne et/ou des modules de deux chaînes différentes.

Pour effectuer ce transfert d'énergie réversible, il est connu d'envoyer des signaux de pilotage aux interrupteurs du convertisseur DC/DC, ces signaux de pilotage comprenant un ou plusieurs paramètres variables, par exemple une fréquence ou un rapport cyclique.

La présence de ces deux bus d'alimentation distincts au sein du circuit peut permettre de proposer deux sources de tension isolées pour un même groupe de consommateurs électriques, par exemple des consommateurs électriques de systèmes d'aide à la conduite ou à la conduite autonome, ou encore d'alimenter un deux groupes de consommateurs pouvant nécessiter deux tensions nominales différentes.

Selon l'invention, les modules sont disposés au sein de l'au moins une chaîne de telle sorte que leur borne primaire soit connectée à la borne secondaire d'un autre module et leur borne secondaire soit connectée à la borne primaire d'un autre module, à l'exception d'un module dont la borne primaire est connectée à la première borne de la chaîne et d'un module dont la borne secondaire est connectée à la seconde borne de la chaîne.

Tous les modules de l'au moins une chaîne peuvent comprendre un convertisseur DC/DC, ce convertisseur étant un convertisseur isolé et réversible.

La première et la deuxième borne de la chaîne peuvent définir l'unique tension de sortie de l'au moins une chaîne autre que des tensions définies entre des bornes tertiaires et quaternaires d'un des modules

Cela signifie qu'il n'y a pas de borne intermédiaire de sortie au sein de la chaîne, c'est-à-dire une borne de sortie connectée à la fois à la borne primaire d'un premier module et à la borne secondaire d'un autre module de la chaîne, cette borne primaire et cette borne secondaire étant connectées ensemble.

L'unité de stockage d'énergie électrique au sein des modules de l'au moins une chaîne peut avoir une tension nominale comprise entre 3 et 60V. Par exemple, la tension nominale de l'unité de stockage d'énergie électrique peut être de 5, 12, 24 ou 48V.

D'autres valeurs de tension nominales sont possibles, notamment supérieures à 60V.

L'unité de stockage d'énergie électrique peut être une cellule d'une batterie de cellules de type lithium-ion.

Tout ou partie des modules de l'au moins une chaîne peuvent comprendre une cellule de commutation bidirectionnelle disposée entre leur borne primaire et leur borne secondaire, cette cellule de commutation comprenant au moins un interrupteur pilotable à semi-conducteur.

La présence de cette cellule de commutation entre les bornes des modules permet de réaliser une redondance lorsque l'on désire déconnecter l'unité de stockage d'énergie d'un des modules du reste de la chaîne. Ainsi si la cellule de commutation dudit module est défectueuse, il est possible de déconnecter l'unité de stockage d'énergie de ce module en pilotant les interrupteurs du pont de commutation, et si un ou plusieurs des interrupteurs du pont de commutation sont défectueux il est possible de fonctionnellement déconnecter l'unité de stockage d'énergie du reste de la chaîne en pilotant la cellule de commutation entre les bornes du module. Cette redondance peut permettre de rendre un circuit employant une chaîne de modules telle que décrite plus résistante aux dysfonctionnement, de prolonger sa durée de vie, et de répondre à un impératif de sécurité de l'utilisateur du véhicule.

La cellule de commutation entre la borne primaire et la borne secondaire des modules peut comprendre un transistor bidirectionnel, notamment un transistor de puissance à base de GaN à quatre quadrants.

En variante, la cellule de commutation entre la borne primaire et la borne secondaire des modules peut comprendre deux transistors unidirectionnels montés en antiparallèle ou en antisérie, notamment des transistors à effet de champ MOS ou des transistors bipolaires.

En variante, la cellule de commutation entre la borne primaire et la borne secondaire des modules peut comprendre un commutateur à microsystème électromécanique.

La cellule de commutation entre la borne primaire et la borne secondaire est différente d'un relais mécanique.

Les interrupteurs du pont de commutation au sein du module et de la cellule de commutation peuvent être du même type.

L'unité de stockage d'énergie au sein des modules de l'au moins une chaîne peut être disposée dans une branche étant dépourvue d'interrupteurs. Autrement dit, l'unité de stockage d'énergie électrique est montée entre deux noeuds du circuit électrique du module et n'est en série entre ces deux noeuds avec aucun interrupteur.

L'invention a aussi pour objet selon l'un de ses aspects un circuit électrique pour l'alimentation d'une machine électrique tournante de propulsion d'un véhicule comprenant :
- une machine électrique polyphasée,
- une interface d'entrée apte à être connectée à une station de charge,
- un ensemble pour l'alimentation d'une machine électrique tournante tel que décrit précédemment
- un système d'interrupteurs permettant pour chaque chaîne de l'ensemble de la connecter aux bornes d'une phase de la machine électrique ou à l'interface d'entrée, et
- une unité de contrôle, apte à piloter les interrupteurs au sein du circuit électrique.

Le premier et le second bus d'alimentation peuvent être destinés à être connectés à des consommateurs électrique et/ou des unités de stockage d'énergie électrique ayant la même tension nominale.

L'unité de contrôle peut piloter les interrupteurs des convertisseurs DC/DC des modules connectés à un même bus d'alimentation de telle sorte qu'au moins un module transfère de l'énergie à au moins un autre module par ledit même bus d'alimentation, les convertisseurs DC/DC de ces modules déchargeant et chargeant leur unité de stockage d'énergie respectivement.

Par cela on entend que l'unité de contrôle possède des moyens de génération de signaux de pilotage aptes à contrôler l'échange d'énergie entre les modules des chaînes du circuit électrique. Notamment, l'unité de contrôle est apte à faire varier un ou plusieurs paramètres de ces signaux de pilotage, par exemple une fréquence ou un rapport cyclique. Dans des exemples connus, l'unité de contrôle peut comprendre un générateur de signaux modulés en largeur d'impulsion.

Ce transfert d'énergie est avantageux notamment car il peut se réaliser entre des modules disposés sur des chaînes différentes grâce à leur connexion au même bus d'alimentation.

Le circuit peut comprendre un troisième bus d'alimentation destiné à être connecté à un consommateur électrique de tension nominale supérieure à la tension nominale des consommateurs et/ou des unités de stockage d'énergie électrique destinés à être connectés au premier et au deuxième bus d'alimentation, et comprenant une chaîne supplémentaire telle que l'au moins une chaîne de l'ensemble décrit précédemment, tous les modules de la chaîne supplémentaire comprenant un convertisseur DC/DC réversible et isolé, la chaîne supplémentaire étant connectée par ses bornes au troisième bus d'alimentation, la chaîne supplémentaire comprenant au moins un module ayant ses bornes tertiaires et quaternaires connectées au premier bus d'alimentation et au moins un module ayant ses bornes tertiaires et quaternaires connectées au deuxième bus d'alimentation, les modules de la chaîne supplémentaire étant notamment répartis entre des modules ayant leur bornes tertiaire et quaternaire connectées au premier bus d'alimentation et des modules ayant leur bornes tertiaire et quaternaire connectées au deuxième bus d'alimentation.

L'unité de contrôle peut piloter les interrupteurs des convertisseurs DC/DC des modules connectés à un même bus d'alimentation de telle sorte que les modules de l'au moins une chaîne de l'ensemble transfèrent de l'énergie aux modules de la chaîne supplémentaire par ledit même bus d'alimentation, les convertisseurs DC/DC des modules de l'au moins une chaîne et les convertisseurs DC/DC des modules de la chaîne supplémentaire déchargeant et chargeant leur unité de stockage d'énergie respectivement, lorsqu'une station de charge applique une tension à l'interface d'entrée.

Ce transfert d'énergie des modules de la l'ensemble vers la chaîne supplémentaire permet de charger les unités de stockage d'énergie électrique des modules de la chaîne supplémentaire lorsqu'une station de charge applique une tension à l'interface d'entrée du circuit, même si la chaîne supplémentaire n'est pas directement connectée aux bornes de l'interface d'entrée.

L'unité de contrôle peut piloter les interrupteurs des convertisseurs DC/DC des modules connectés à un même bus d'alimentation de telle sorte que les modules de l'au moins une chaîne transfèrent de l'énergie aux modules de la chaîne supplémentaire par ledit même bus d'alimentation, les convertisseurs DC/DC des modules de l'au moins une chaîne et les convertisseurs DC/DC des modules de la chaîne supplémentaire déchargeant et chargeant leur unité de stockage d'énergie respectivement, lorsque la machine électrique fonctionne en générateur.

Ce transfert d'énergie des modules de la l'ensemble vers la chaîne supplémentaire permet de charger les unités de stockage d'énergie électrique des modules de la chaîne supplémentaire lorsque la machine électrique fonctionne en générateur, même si la chaîne supplémentaire n'est pas directement connectée aux phases de la machine électrique.

L'unité de contrôle peut piloter les interrupteurs des convertisseurs DC/DC des modules connectés à un même bus d'alimentation de telle sorte à ce que les modules de la chaîne supplémentaire transfèrent de l'énergie aux modules de l'au moins une chaîne par ledit même bus d'alimentation, les convertisseurs DC/DC des modules de l'au moins une chaîne et les convertisseurs DC/DC des modules de la chaîne supplémentaire chargeant et déchargeant leur unité de stockage d'énergie respectivement, lorsque la charge connectée au troisième bus d'alimentation est inférieure à une valeur seuil prédéfinie ou nulle.

La valeur seuil peut correspondre à un rapport entre l'énergie consommée par les consommateurs destinés à être connectés au troisième bus d'alimentation et l'énergie maximale que peut fournir la chaîne supplémentaire, notamment la valeur seuil peut être égale à 10%.

Ce transfert d'énergie des modules de la chaîne supplémentaire vers l'au moins une chaîne de l'ensemble permet de charger les unités de stockage d'énergie électrique de l'au moins une chaîne lorsque les consommateurs connectés au second bus d'alimentation consomment peu d'énergie ou ne sont pas activés, et en conséquence peut prolonger l'autonomie des unités de stockage de l'au moins une chaîne.

L'alimentation du troisième bus d'alimentation depuis l'interface d'entrée ou depuis les phases du stator de la machine électrique tournante peut ne s'effectuer exclusivement que par transfert d'énergie électrique via le premier bus d'alimentation et/ou par transfert d'énergie électrique via le deuxième bus d'alimentation.

Les unités de stockage d'énergie électrique contenues dans les modules de la chaîne supplémentaire peuvent posséder une composition chimique, une taille et/ou une tension nominale différente par rapport aux unités de stockage d'énergie électrique contenues dans les modules de l'au moins une chaîne de l'ensemble.

Le nombre de chaînes mises en oeuvre dans l'au moins une chaîne peut être supérieur ou égal au nombre de phases de la machine électrique tournante.

Le système d'interrupteurs peut permettre pour chaque chaîne de l'au moins une chaîne de l'ensemble de la connecter aux bornes d'une phase de la machine électrique à laquelle cette chaîne est dédiée. Autrement dit, une chaîne donnée n'est connectable qu'à une seule phase du stator de la machine électrique.

La machine électrique tournante est par exemple une machine synchrone, par exemple une machine synchrone triphasée ou une machine synchrone dont l'enroulement électrique de stator définit un double système triphasé. L'enroulement électrique de stator est par exemple formé par des fils ou par des barres conductrices reliées les unes les autres.

Dans tout ce qui précède, le rotor peut être un rotor à griffes. Ce rotor comprend alors une première et une deuxième roues polaires imbriquées, la première roue polaire définissant une série de griffes de forme globalement trapézoïdale, chaque griffe s'étendant axialement en direction de la deuxième roue polaire, la deuxième roue polaire définissant une série de griffes de forme globalement trapézoïdale, chaque griffe s'étendant axialement en direction de la première roue polaire. Un aimant permanent peut être reçu entre deux griffes consécutives circonférentielle-ment parlant pour le rotor.

En variante, le rotor peut être autre qu'un rotor à griffes, comprenant par exemple un paquet de tôles ou étant un rotor à cage.

Lorsque la machine tournante est une machine synchrone, elle peut présenter un rotor bobiné ou un rotor à aimants permanents.

La machine électrique tournante peut présenter une puissance électrique nominale de 25kW, 100kW, 200kW, ou plus.

L'unité de contrôle du circuit peut être unique ou comprendre une unité de contrôle principale et plusieurs unités de contrôles subsidiaires, par exemple une unité de contrôle subsidiaire par chaîne dans le circuit et/ou une unité de contrôle subsidiaire par module.

Le circuit électrique peut être réversible, c'est-à-dire que les interrupteurs au sein du circuit peuvent être pilotés de manière à ce que les chaînes de modules fournissent une tension alternative aux bornes de l'interface d'entrée.

L'invention pourra être mieux comprise à la lecture de la description qui va suivre d'exemples non limitatifs de mise en oeuvre de celle-ci :
La Figure 1 représente un module destiné à être mis en oeuvre au sein d'une chaîne de modules électriques d'un circuit pour l'alimentation d'une machine électrique tournante.
La Figure 2a représente un ensemble pour l'alimentation d'une machine électrique, comprenant une chaîne de modules selon la Figure 1,
La Figure 2b représente un exemple de tension de sortie d'une chaîne de modules selon la Figure 2a pour l'alimentation d'une machine électrique.
La Figure 2c représente un exemple de tension d'entrée d'une chaîne de modules selon la Figure 2a permettant de charger les unités de stockage d'énergie électrique au sein des modules.
La Figure 3 représente un circuit pour l'alimentation d'une machine électrique tournante de propulsion d'un véhicule, employant ensemble selon la Figure 2a.

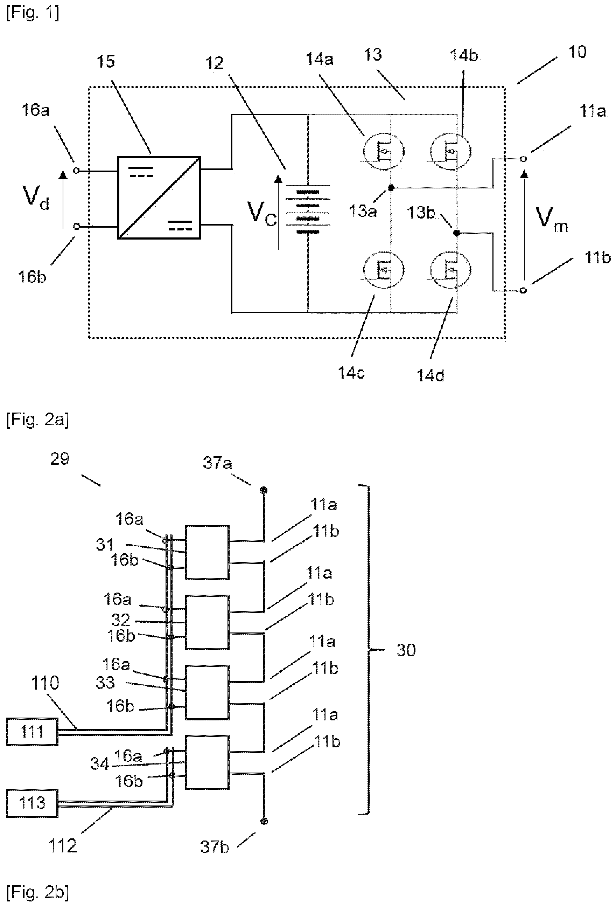

On a représenté dans la Figure 1 un module 10 destiné à être mis en oeuvre au sein d'une chaîne de modules électriques d'un circuit pour l'alimentation d'une machine électrique tournante.

Le module 10 tel que représenté dans la Figure 1 comprend une borne primaire 11a et une borne secondaire 11b, la tension entre les bornes 11a et 11b étant notée Vm.

Le module 10 comprend aussi une unité de stockage d'énergie électrique 12, de tension nominale Vc. Cette unité de stockage d'énergie électrique peut être une cellule d'une batterie employant une pluralité de cellules, et peut avoir une tension nominale comprise entre 3 et 60V par exemple. Cette unité de stockage d'énergie 12 est disposée dans une branche en parallèle d'un pont de commutation 13, cette branche ne comprenant pas d'interrupteurs. Ce pont de commutation 13 est monté en H et comprend des interrupteurs pilotables 14a, 14b, 14c, 14d, disposés de part et d'autre des points milieu 13a et 13b, ces points milieu étant connectés respectivement à la borne primaire 11a et la borne secondaire 11b du module 10. Dans l'exemple représenté dans la Figure 1a, les interrupteurs 14a, 14b, 14c, 14d sont des transistors à effet de champ MOS.

Lorsqu'une unité de contrôle pilote les interrupteurs du pont de commutation 13 de telle sorte que les interrupteurs 14a, 14d sont en position fermée et les interrupteurs 14b, 14c sont en position ouverte, la tension Vₘ entre les bornes 11a et 11b du module 10 est égale à Vc. Lorsque les interrupteurs 14b, 14c sont en position fermée et les interrupteurs 14a, 14d sont en position ouverte, la tension Vₘ entre les bornes 11a et 11b du module 10 est égale à -Vc.

Lorsqu'une unité de contrôle pilote les interrupteurs 14a, 14b pour être en position ouverte et les interrupteurs 14c, 14d en position fermée, ou pilote les interrupteurs 14a, 14b pour être en position fermée et les interrupteurs 14c, 14d en position ouverte, la tension Vₘ entre les bornes 11a et 11b du module 10 est nulle, l'unité de stockage d'énergie étant fonctionnellement déconnectée des bornes 11a 11b du module 10.

Le module 10 comprend aussi un convertisseur DC/DC 15, d'une part connecté aux bornes de l'unité de stockage d'énergie 12, et d'autre part connecté à une borne tertiaire 16a et une borne quaternaire 16b du module 10.

Le convertisseur DC/DC 15 peut élever ou abaisser la tension Vc provenant de l'unité de stockage d'énergie électrique 12.

Le convertisseur DC/DC 15 contient au moins un interrupteur pilotable non représenté dans la Figure 1 de telle sorte à pouvoir être activé ou désactivé par une commande interne ou externe au module 10. Le convertisseur DC/DC est aussi un convertisseur isolé, pouvant employer un transformateur notamment un transformateur employant des enroulements.

Le convertisseur DC/DC 15 est aussi réversible, en ce qu'il est capable de réaliser la conversion de tension depuis l'unité de stockage d'énergie 12 vers les bornes tertiaire 16a et quaternaire 16b et inversement. Ainsi, lorsqu'une source de tension applique une tension continue aux bornes tertiaire 16a et quaternaire 16b, le convertisseur DC/DC peut recharger l'unité de stockage d'énergie 12 du module 10.

Dans la Figure 2a on a représenté un ensemble 103 pour l'alimentation d'une machine électrique, comprenant une chaîne 30 de quatre modules 31, 32, 33, 34, un premier bus d'alimentation 110 et un deuxième bus d'alimentation 112. Dans cet exemple chaque module est identique et selon le module 10 de la Figure 1. Les modules 31, 32, 33, 34 sont chaînés entre eux par leurs bornes primaires et secondaires entre les deux bornes 37a 37b de la chaîne. Plus précisément, le module 31 est connecté à la première borne 37a de la chaîne 30 par sa borne primaire et à la borne primaire du module 32 par sa borne secondaire, le module 32 est connecté à la borne primaire du module 33 par sa borne secondaire, le module 33 est connecté à la borne primaire du module 34 par sa borne secondaire et le module 34 est connecté à la deuxième borne 37b de la chaîne 30 par sa borne secondaire.

Dans l'exemple représenté dans la Figure 2a, les bornes tertiaires 16a et quaternaires 16b des modules 31, 32, 33 de la chaîne 30 sont connectées en parallèle au premier bus d'alimentation 110, relié à une interface 111. Les bornes tertiaire 16a et quaternaire 16b du module 34 sont connectées au second bus d'alimentation 112, relié à une interface 113.

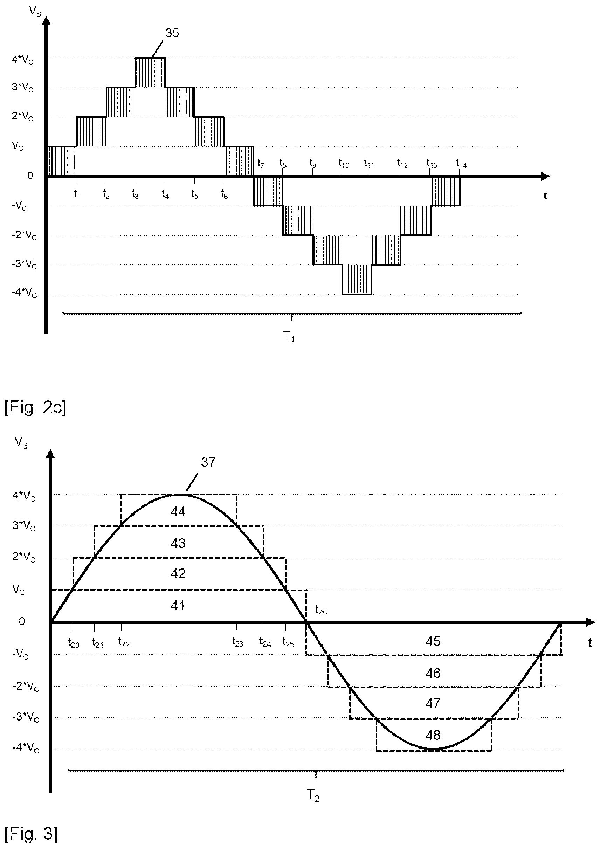

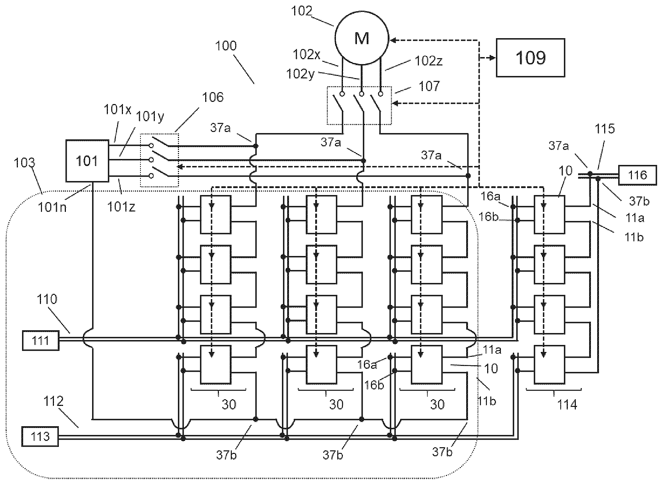

La chaîne 30 a une unique tension de sortie qui est définie entre ses deux bornes 37a et 37b. Indépendamment de la valeur pouvant être prise par cette tension de sortie, elle sera désignée Vs par la suite. Dans l'exemple représenté dans la Figure 2, les unités de stockage d'énergie électrique au sein des quatre modules 31, 32, 33, 34 étant identiques et de tension nominale Vc, la tension Vs peut prendre comme valeur tous les multiples entiers positifs ou négatifs de Vc entre -4*Vc et 4*Vc lorsque ces unités de stockage d'énergie électrique sont aptes à fournir une tension.

On a représenté dans la Figure 2b un graphe 35 représentant un exemple de tension alternative Vs générée par la chaîne de module 30 représentée dans la Figure 2a. Cette tension alternative générée vs est apte à alimenter une machine électrique tournante, elle est périodique de période T₁ et sa forme est assimilable à un sinus.

Aux instants 0, t₁, t₂, et t₃, les modules 31, 32, 33, 34 de la chaîne 30 sont pilotés successivement afin que la tension entre leurs bornes soit égale à Vc, la tension maximale de la tension alternative générée Vs entre deux instants successifs devenant égale à Vc, 2* Vc, 3* Vc et 4*Vc respectivement. Par piloter un module, on entend piloter les interrupteurs au sein dudit module afin d'obtenir la tension désirée entre ses bornes.

Aux instants t₄, t₅, te les modules 31, 32, 33, 34 de la chaîne 30 sont pilotés successivement afin que la tension entre leurs bornes soit égale à 0, la tension maximale de la tension alternative générée 35 entre deux instants successifs devenant égale à 3*Vc, 2* Vc et Vc respectivement.

L'intervalle de temps entre les instant 0 et t₇ correspond à la partie positive de la période T₁ de la tension alternative 35.

L'ordre de pilotage des modules 31, 32, 33, 34 entre les instants 0 et t₇ peut correspondre par exemple à l'état de charge de l'unité de stockage d'énergie électrique au sein des modules 31, 32, 33, 34. Afin d'équilibrer l'état de charge des unités de stockage d'énergie contenues dans les modules 31, 32, 33, 34, les modules peuvent par exemple être pilotés aux instants 0, t₁, t₂, et ta selon l'ordre décroissant d'état de charge de leur unité de stockage d'énergie électrique et l'ordre croissant aux instants t₄, t₅, t₆ et t₇. Ainsi l'unité de stockage étant la plus chargée parmi les modules sera déchargée plus longtemps et l'unité de stockage la moins chargée sera déchargée moins longtemps, prolongeant l'autonomie de la chaîne.

Aux instants t₇, t₈, t₉, et t₁₀, les modules 31, 32, 33, 34 de la chaîne 30 sont pilotés successivement afin que la tension entre leurs bornes soit égale à -Vc, la tension maximale de la tension alternative générée 35 entre deux instants successifs devenant égale à -V_{C}, -2* V_{C}, -3* V_{C} et -4*Vc respectivement. Aux instants t₁₁, t₁₂, et t₁₃ modules 31, 32, 33, 34 de la chaîne 30 sont pilotés successivement afin que la tension entre leurs bornes soit égale à 0, la tension maximale de la tension alternative générée 35 entre deux instants successifs devenant égale à -3*Vc, -2* Vc et -Vc respectivement.

L'intervalle de temps entre les instant t₇ et t₁₄ correspond à la partie négative de la période T₁ de la tension alternative Vs.

L'ordre de pilotage des modules 31, 32, 33, 34 entre les instants t₇ et t₁₃ peut correspondre par exemple à l'état de charge de l'unité de stockage d'énergie électrique au sein des modules 31, 32, 33, 34, 35. Afin d'équilibrer l'état de charge des unités de stockage d'énergie contenues dans les modules 31, 32, 33, 34, les modules peuvent par exemple être pilotés selon l'ordre décroissant d'état de charge de leur unité de stockage d'énergie électrique entre les instants t₇, t₈, t₉, et t₁₀ et l'ordre croissant aux instants t₁₁, t₁₂, et t₁₃.

Entre deux instants successifs, un module peut être piloté de manière à ce que la tension entre ses bornes passe successivement de V_{C} à 0 et inversement durant la partie positive de la période T₁ ou -V_{C} à 0 et inversement durant la partie négative de la période T₁, par exemple par modulation à largeur d'impulsion. Cela permet de réduire les distorsions harmoniques de la tension alternative générée 35.

Les intervalles de temps entre deux instants successifs 0, t1, t2, t3, etc... peuvent être tous ou partiellement identiques.

On a représenté dans la Figure 2c un graphe 37 représentant un exemple de charge des unités de stockage d'énergie au sein des modules de la chaîne 30 représentée dans la Figure 2a lorsqu'une tension alternative Vs est appliquée aux bornes de ladite chaîne.

La tension Vs représentée dans la Figure 2c est une tension alternative sinusoïdale apte à être appliquée aux bornes 37a 37b de la chaîne 30 de la Figure 2. Dans l'exemple représenté la tension Vs a une tension maximale et une tension minimale de 4*Vc et de -4*Vc respectivement, et est périodique de période T₂. Cette tension alternative peut provenir d'une station de charge, connectée aux bornes de la chaîne 30.

Dans l'exemple représenté dans la Figure 2c, durant l'intervalle de temps 41 entre l'instant 0 et l'instant t₂₆, les instants où la tension Vs est nulle, un module de la chaîne 30, par exemple le module 31, est piloté de telle sorte que la tension entre ses bornes soit égale à Vc. Il en résulte que durant l'intervalle de temps 41 l'unité de stockage d'énergie électrique du module 31 est chargée. Durant l'intervalle de temps 42 entre l'instant t₂₀ et l'instant t₂₅, les instants où la tension 37 est égale à Vc, un autre module de la chaîne 30, par exemple le module 32, est piloté de telle sorte que la tension entre ses bornes soit égale à Vc. Il en résulte que durant l'intervalle de temps 42 l'unité de stockage d'énergie électrique du module 32 est chargée. Durant l'intervalle de temps 43 entre l'instant t₂₁ et l'instant t₂₄, les instants où la tension 37 est égale à 2*Vc, un autre module de la chaîne 30, par exemple le module 33, est piloté de telle sorte que la tension entre ses bornes soit égale à Vc. Il en résulte que durant l'intervalle de temps 43 l'unité de stockage d'énergie électrique du module 33 est chargée. Durant l'intervalle de temps 44 entre l'instant t₂₂ et l'instant t₂₃, les instants où la tension 37 est égale à 3*Vc, un autre module de la chaîne 30, par exemple le module 34, est piloté de telle sorte que la tension entre ses bornes soit égale à Vc. Il en résulte que durant l'intervalle de temps 44 l'unité de stockage d'énergie électrique du module 34 est chargée.

Similairement, durant les intervalles de temps 45, 46, 47 et 48, durant la demi-période négative de la période T₂ de la tension alternative Vs, les modules 31, 32, 33, 34 de la chaîne 30 sont successivement pilotés pour la tension entre leurs bornes primaire et secondaire soit égale à -Vc entre les instants où la tension alternative Vs est égale à 0, -Vc, -2*Vc et -3*Vc respectivement de telle sorte que leur unité de stockage d'énergie électrique respective soit chargée durant ces intervalles de temps respectifs.

L'ordre de pilotage des modules 31, 32, 33, 34 peut correspondre par exemple à l'état de charge de l'unité de stockage d'énergie électrique au sein des modules 31, 32, 33, 34. Afin d'équilibrer l'état de charge des unités de stockage d'énergie électrique contenues dans les modules 31, 32, 33, 34, les modules peuvent par exemple être chargés durant les intervalles 41, 42, 43, 44 respectivement selon l'ordre croissant d'état de charge de leur unité de stockage d'énergie électrique. Ainsi, l'unité de stockage d'énergie électrique la plus déchargée sera chargée pendant plus de temps et inversement. Cet ordre croissant peut être appliqué similairement pour les intervalles 45, 46, 47, 48. Equilibrer la recharge entre les unités de stockage d'énergie électrique permet de réduire le temps de recharge global de la chaîne 30.

Entre deux instants successifs, un module peut être piloté de manière à ce que la tension entre ses bornes passe successivement de V_{C} à 0 et inversement durant la partie positive de la période T₂ ou -V_{C} à 0 et inversement durant la partie négative de la période 36, par exemple par modulation à largeur d'impulsion. Cela permet de réduire les distorsions harmoniques lors de la charge de l'unité de stockage d'énergie électrique.

La Figure 3 représente un circuit 100, destiné à être intégré au sein d'un véhicule à propulsion électrique, employant des chaînes 30 selon la Figure 2a.

Le circuit 100 comprend une interface d'entrée 101. Cette interface d'entrée est destinée à être connectée par exemple à une station de charge pour véhicule à propulsion électrique, apte à fournir une tension électrique alternative mono ou polyphasée ou une tension continue.

Dans l'exemple représenté dans la Figure 3, l'interface d'entrée 101 comprend trois bornes 101x, 101y, 101z, aptes à être connectées à une phase respective d'une tension alternative triphasée. L'interface 101 comprend une borne supplémentaire 101n apte à être connectée au neutre d'une tension alternative. Lorsqu'une station de charge pour véhicule connectée à l'interface d'entrée fournit une tension continue ou une tension alternative monophasée, un circuit d'interconnexion non représenté disposé entre cette station de charge et l'interface d'entrée 101 du circuit 100 permet de répartir la tension fournie sur les trois bornes 101x, 101y et 101z.

Le circuit 100 comprend une machine électrique tournante 102. Dans l'exemple représenté dans la Figure 3, la machine électrique 102 est une machine polyphasée, comprenant trois phases, notées 102x, 102y et 102z.

Une unité de contrôle 109 est présente dans le circuit 100. L'unité de contrôle 109 peut être un processeur ou un circuit intégré, par exemple un FPGA ou un ASIC, comprenant les moyens de mettre en oeuvre les fonctions de contrôle du circuit 100 et de piloter l'ensemble interrupteurs au sein du circuit 100.

Le circuit 100 tel que représenté comprend un ensemble 103 composé de trois chaînes 30, un premier bus d'alimentation 110 et un deuxième bus d'alimentation 112. Ces trois chaînes sont selon la chaîne 30 représentée dans la Figure 2a et sont composées d'une pluralité de modules électriques 10 selon la Figure 1. Dans cet exemple, les chaînes 30 comprennent chacune quatre modules 10 identiques et selon le module 10 représenté dans la Figure 1.

Dans l'exemple représenté dans la Figure 3, l'ensemble des bornes tertiaires 16a et quaternaires 16b de toutes les modules 10 de l'ensemble 103 sont connectées en parallèle soit au premier bus d'alimentation 110, soit au second bus d'alimentation 112. Dans cet exemple, les modules 10 des chaînes 30 dont la borne secondaire 11b est connectée à la borne 37b de sa chaîne respective sont connectés au second bus d'alimentation.

Le premier bus d'alimentation et le deuxième bus d'alimentation sont connectés à une première interface 111 et une deuxième interface 113 respectivement. Ces interfaces 111, 113 sont destinées à être connectée à un consommateur électrique respectif, possédant une tension nominale étant comprise par exemple entre 8 et 48V, par exemple 12V. Ces consommateurs peuvent être un équipement dit à basse tension du véhicule employant le circuit 100 de la Figure 3, par exemple un système d'assistance au freinage d'un véhicule, et/ou une unité de stockage d'énergie électrique. Le convertisseurs DC/DC au sein des modules 10 réalisent alors une élévation ou un abaissement de la tension de l'unité de stockage d'énergie au sein de leur module respectif pour que la tension entre les bornes 16a et 16b soit égale à la tension nominale du consommateur électrique/et ou de l'unité de stockage d'énergie destiné à être connecté au bus d'alimentation auquel ces convertisseurs DC/DC sont connectés.

Les chaînes 30 de la Figure 3 peuvent être connectées à une phase 102x, 102y, 102z respective de la machine électrique 102 en fermant les interrupteurs de la pluralité d'interrupteurs 107.

Lorsque les chaînes 30 sont connectées à une phase 102x, 102y, 102z respective de la machine électrique 102, l'unité de contrôle 109 peut piloter les interrupteurs de l'ensemble 103 de telle sorte à ce qu'elles fournissent chacune une tension alternative aux phases 102x, 102y, 102z de la machine électrique 102. En exemple, cette tension fournie peut être telle que la tension 35 représentée dans la Figure 2b, les tensions générées par les chaînes 30 pouvant être déphasées entre elles de 120 degrés.

Lorsque les chaînes 30 sont connectées à une phase 102x, 102y, 102z respective de la machine électrique 102, et que la machine électrique 102 est génératrice d'une tension alternative, par exemple lors d'un freinage régénératif, l'unité de contrôle 109 peut piloter les interrupteurs de l'ensemble 103 de telle sorte à ce les unités de stockage d'énergie électrique des modules 10 puissent être rechargées à partir de cette tension alternative.

Dans l'exemple représenté dans la Figure 3, les chaînes 30 peuvent être connectées à une borne respective 101x, 101y, 101z de l'interface d'entrée en fermant les interrupteurs de la pluralité d'interrupteurs 106. Lorsqu'elles sont reliées à l'interface d'entrée, les chaînes sont aptes à recevoir une tension alternative ou continue fournie par une borne de recharge connectée à l'interface d'entrée.

Dans l'exemple représenté dans la Figure 3, le circuit 100 est réversible, c'est-à-dire que l'unité de contrôle peut piloter les interrupteurs au sein du circuit de telle sorte à ce que les chaînes fournissent une tension alternative aux bornes de l'interface d'entrée 101. En exemple, les chaînes peuvent générer une tension telle que la tension 35 représentée dans la Figure 2, les tensions générées par les chaînes 30 pouvant être déphasées de 120° entre elles.

Le circuit 100 de la Figure 3 comprend aussi une chaîne de modules supplémentaire 114, les modules 10 de cette chaîne 114 étant identiques entre eux et selon le module 10 de la Figure 1.

Dans cet exemple, la chaîne supplémentaire 114 comprend quatre modules 10 disposés entre ses bornes. Les unités de stockage d'énergie au sein des modules 10 de la chaîne supplémentaire 114 peuvent avoir une composition chimique, une taille et/ou une tension nominale différente par rapport aux unités de stockage d'énergie électrique contenues dans les modules 10 de l'ensemble 103.

Les bornes 37a 37b de la chaîne supplémentaire 114 sont connectées en parallèle à un troisième bus d'alimentation 115. Ce troisième bus d'alimentation 115 est connecté à une interface supplémentaire 116 étant destinée à être connectée à un consommateur électrique, possédant une tension nominale étant de plusieurs centaines de volts, par exemple 400V, 800V ou bien plus de 1000V. Ce consommateur peut être un équipement dit à haute tension du véhicule employant le circuit 100 de la Figure 3, par exemple un système de refroidissement du groupe motopropulseur ou un système de climatisation.

Ainsi, les modules 10 de la chaîne supplémentaire 114 peuvent être pilotés de telle sorte à ce qu'ils fournissent une tension continue, apte à être fournie au consommateur supplémentaire destiné à être connecté à l'interface supplémentaire 116.

Les bornes tertiaires 16a et quaternaires 16b des modules 10 de la chaîne supplémentaire sont connectées en parallèle soit au premier bus d'alimentation 110, soit au deuxième bus d'alimentation 112.

Cette connexion des modules de l'ensemble 103 et de la chaîne supplémentaire 114 aux mêmes bus d'alimentation 110 et 112, couplé au fait que le convertisseur DC/DC au sein des modules 10 est réversible permet de réaliser un transfert d'énergie entre plusieurs modules 10 au sein de l'ensemble 103 et/ou de la chaîne supplémentaire 114, connectés au même bus d'alimentation 110 ou 112.

Dans le circuit 100 représenté dans la Figure 3, l'alimentation du troisième bus d'alimentation 115 depuis l'interface d'entrée 101 ou depuis les phases 102x, 102y, 102z du stator de la machine électrique tournante 102 ne s'effectue exclusivement que par transfert d'énergie électrique via le premier bus d'alimentation 110 et/ou par transfert d'énergie électrique via le deuxième bus d'alimentation 112.

Le transfert d'énergie entre plusieurs modules 10 connectés au même bus d'alimentation 110 ou 112 peut permettre dans un premier exemple d'équilibrer l'état de charge de l'unité de stockage d'énergie électrique entre au moins deux modules 10 connectés au même bus d'alimentation 110 ou 112, au moins un premier module 10 déchargeant son unité de stockage d'énergie électrique, et au moins un second module 10 chargeant son unité de stockage d'énergie électrique. Cet équilibrage de l'état de charge des unités de stockage d'énergie électrique par le même bus d'alimentation 110 ou 112 est avantageux car il peut être réalisé entre deux modules de deux chaînes différentes connectés au même bus d'alimentation 110 ou 112, et donc prolonger l'autonomie générale du circuit 100.

Dans un second exemple, ce transfert d'énergie peut permettre de charger les unités de stockage d'énergie électrique des modules 10 de la chaîne supplémentaire 114 lorsqu'une station de charge connectée à l'interface d'entrée 101 fournit une tension, alternative ou continue. Dans ce cas, les modules 10 de l'ensemble 103 transfèrent de l'énergie aux modules de la chaîne supplémentaire 114 par les bus d'alimentation 110 et 112. La chaîne de modules supplémentaire 114 n'étant pas connectée aux bornes de l'interface d'entrée 101, ce transfert d'énergie permet de charger à la fois les unités de stockage d'énergie des chaînes 30 de l'ensemble 103 et les unités de stockage d'énergie de la chaîne supplémentaire 114.

Dans un troisième exemple, ce transfert d'énergie peut permettre de charger les unités de stockage d'énergie électrique des modules 10 de la chaîne supplémentaire 114 lorsque la machine électrique 102 est génératrice, par exemple lors d'un freinage régénératif. Dans ce cas, les modules 10 des chaînes 30 de l'ensemble 103 transfèrent de l'énergie aux modules de la chaîne supplémentaire 114 par les bus d'alimentation 110 et 112. La chaîne de modules supplémentaire 114 n'étant pas connectée aux bornes de la machine électrique 102, ce transfert d'énergie permet de charger à la fois les unités de stockage d'énergie des chaînes 30 de l'ensemble 103 et les unités de stockage d'énergie de la chaîne supplémentaire 114.

Dans un quatrième exemple, ce transfert d'énergie peut permettre de charger les unités de stockage d'énergie des modules 10 des chaînes 30 de l'ensemble 103 lorsque la charge connectée au troisième bus d'alimentation 115 est inférieure à un seuil prédéterminé ou nulle. Dans ce cas, les modules 10 de la chaîne supplémentaire 114 transfèrent de l'énergie aux modules des chaînes 30 de l'ensemble 103 par les bus d'alimentation 110 et 112. Cela permet d'utiliser l'énergie stockée dans les modules 10 de la chaîne supplémentaire 114 afin de recharger les unités de stockage d'énergie des modules 10 des chaînes 30 de l'ensemble 103 lorsque la chaîne supplémentaire 114 est peu utilisée par les consommateurs connectés au bus d'alimentation 115. La valeur seuil peut correspondre à un rapport entre l'énergie consommée par les consommateurs destinés à être connectés au bus d'alimentation 115 et l'énergie maximale que peut fournir la chaîne supplémentaire 114, notamment la valeur seuil peut être égale à 10%. Il en résulte une amélioration de l'autonomie globale du circuit 100.

L'invention n'est pas limitée à ce qui a été décrit en référence aux figures.

Seule une partie des modules 10 des chaînes 30 de l'ensemble 103 du circuit 100 peuvent comprendre un convertisseur DC/DC, et seule une partie des modules 10 peuvent comprendre un convertisseur DC/DC réversible.

Tous les modules 10 des chaînes 30 de l'ensemble 103 peuvent ne pas être connectés au premier bus d'alimentation 110 ou au deuxième bus d'alimentation 112, au moins un module 10 de chaque chaîne 30 de la l'ensemble 103 devant être connecté au premier bus d'alimentation 110 et au moins un module de chaque chaîne 30 de l'ensemble 103 devant être connecté au deuxième bus d'alimentation 112.

Les chaînes 30 de la l'ensemble 103 peuvent ne pas avoir le même nombre de modules 10 connectés au premier bus d'alimentation 110 et/ou au deuxième bus d'alimentation 112.

L'unité de contrôle 109 peut comprendre une unité de contrôle principale et plusieurs unités de contrôles subsidiaires, par exemple une unité de contrôle subsidiaire par chaîne 30 et 114, et une unité de contrôle subsidiaire par module 10, les fonctions de contrôle du circuit et de pilotage des interrupteurs au sein du circuit étant réparties au sein des unités de contrôles principales et subsidiaires.

Tout ou partie des modules 10 dans le circuit 100 peuvent comprendre une cellule de commutation bidirectionnelle disposée entre leur borne primaire 11a et leur borne secondaire 11b, cette cellule de commutation comprenant au moins un interrupteur pilotable à semi-conducteur. Cette cellule de commutation permet de fonctionnellement déconnecter l'unité de stockage d'énergie 12 des bornes 11a 11b d'un module 10 en étant pilotée en position fermée. Il est aussi possible de proposer de la redondance pour la déconnexion de l'unité de stockages d'énergie 12 d'un module 10 en pilotant en position fermée à la fois la cellule de commutation et à la fois les interrupteurs du pont de commutation 13. Cette redondance permet de rendre un module plus résistant aux dysfonctionnements, par exemple à un court-circuit d'un interrupteur.

Cette cellule de commutation peut comprendre un transistor bidirectionnel, par exemple un transistor de puissance à base de Nitrure de Gallium (GaN) à quatre quadrants, ou deux transistors unidirectionnels montés en antiparallèle ou en antisérie, par exemple des transistors à effet de champ MOS ou des transistors bipolaires, ou un commutateur à système électromécanique.

Les interrupteurs du pont de commutation 13 au sein du module 10 et de la cellule de commutation peuvent être du même type

## Revendications

1. Ensemble (103) pour l'alimentation d'une machine électrique tournante de propulsion (102) d'un véhicule comprenant :
- au moins une chaine (30) de modules (10) comprenant une première borne (37a) et une deuxième borne (37b) chaque module (10) comprenant :
- une borne primaire (11a) et une borne secondaire (11b), la borne primaire (11a) étant connectée à la borne secondaire (11b) d'un autre module (10) et/ou la borne secondaire (11b) est connectée à la borne primaire (11a) d'un autre module (10),
- une unité de stockage d'énergie électrique (12),
- un pont de commutation en H (13), le pont (13) comprenant deux bras de commutation comprenant deux interrupteurs pilotables (14a, 14b, 14c, 14d), disposés de part et d'autres d'un point milieu (13a, 13b), chaque point milieu du pont étant connecté à l'une des bornes (11a, 11b) du module (10), l'unité de stockage d'énergie électrique (12) étant disposée dans une branche en parallèle des bras de commutation, et
- au moins un module (10) comprenant un convertisseur DC/DC (15), comprenant des interrupteurs pilotables, connecté d'une part aux bornes de l'unité de stockage d'énergie électrique (12) et d'autre part à une borne tertiaire (16a) et à une borne quaternaire (16b) du module (10),
- un premier et un deuxième bus d'alimentation (110, 112), destinés à être connectés à un consommateur électrique et/ou une unité de stockage d'énergie électrique respectif,
chaque chaîne comprenant au moins un module (10) ayant ses bornes tertiaires (16a) et quaternaires (16b) connectées au premier bus d'alimentation (110) et au moins un module (10) ayant ses bornes tertiaire (16a) et quaternaire (16b) connectées au deuxième bus d'alimentation (112), les modules (10) de chaque chaîne (30) étant notamment répartis entre des modules (10) ayant leur bornes tertiaire (16a) et quaternaire (16b) connectées au premier bus d'alimentation (110) et des modules (10) ayant leur bornes tertiaire (16a) et quaternaire (16b) connectées au deuxième bus d'alimentation (112),
**Caractérisé en ce que** au moins un convertisseur DC/DC (15) d'un module (10) de chaque chaîne (30) est un convertisseur isolé et réversible.

2. Ensemble (103) selon la revendication précédente, tous les modules (10) de l'au moins une chaîne (30) comprenant un convertisseur DC/DC (30), ce convertisseur étant un convertisseur isolé et réversible.

3. Ensemble (103) selon l'une quelconque revendication précédente, la première (37a) et la deuxième borne (37b) définissant l'unique tension de sortie de l'au moins une chaîne (30) autre que des tensions définies entre des bornes tertiaires (16a) et quaternaires (16b) d'un des modules (10).

4. Ensemble (103) selon l'une quelconque revendication précédente, l'unité de stockage d'énergie (12) au sein des modules (10) étant disposée dans une branche en parallèle des bras de commutation, cette branche étant dépourvue d'interrupteurs.

5. Ensemble (103) selon l'une quelconque revendication précédente, tout ou partie des modules (10) de l'au moins une chaîne (30) comprenant une cellule de commutation bidirectionnelle disposée entre leur borne primaire (11a) et leur borne secondaire (11b), cette cellule de commutation comprenant au moins un interrupteur pilotable à semi-conducteur.

6. Ensemble (103) selon l'une quelconque revendication précédente, l'unité de stockage d'énergie électrique (12) au sein des modules (10) de l'au moins une chaîne (30) ayant une tension nominale comprise entre 3 et 60V.

7. Ensemble (103) selon la revendication précédente, le premier et le second bus d'alimentation (110, 112) étant destinés à être connectés à des consommateurs électrique et/ou des unités de stockage d'énergie électrique ayant la même tension nominale.

8. Circuit électrique (100) pour l'alimentation d'une machine électrique tournante de propulsion (102) d'un véhicule comprenant :
- une machine électrique polyphasée (102),
- une interface d'entrée (101) apte à être connectée à une station de charge,
- un ensemble (103) pour l'alimentation d'une machine électrique tournante (102) selon l'une quelconque revendication précédente,
- un système d'interrupteurs (106, 107) permettant pour chaque chaîne (30) de l'ensemble (103) de la connecter aux bornes d'une phase (102x, 102y, 102z) de la machine électrique (102) ou à l'interface d'entrée (101), et
- une unité de contrôle (109), apte à piloter les interrupteurs au sein du circuit électrique (100).

9. Circuit (100) selon la revendication précédente, l'unité de contrôle (109) étant apte à piloter les interrupteurs des convertisseurs DC/DC (15) des modules (10) connectés à un même bus d'alimentation (110, 112) de telle sorte qu'au moins un module (10) transfère de l'énergie à au moins un autre module (10) par ledit même bus d'alimentation (110, 112), les convertisseurs DC/DC (15) de ces modules (10) déchargeant et chargeant leur unité de stockage d'énergie (12) respectivement.

10. Circuit (100) selon l'une quelconque revendication 8 à 9, le circuit (100) comprenant un troisième bus d'alimentation (115) destiné à être connecté à un consommateur électrique de tension nominale supérieure à la tension nominale des consommateurs et/ou des unités de stockage d'énergie électrique destinés à être connectés au premier et au deuxième bus d'alimentation (110, 112), et comprenant une chaîne supplémentaire (114) telle que l'au moins une chaîne (30) de l'ensemble (103) selon l'une quelconque revendication 2 à 7.

11. Circuit (100) selon la revendication précédente, l'unité de contrôle (109) étant apte à piloter les interrupteurs des convertisseurs DC/DC (15) des modules (10) connectés à un même bus d'alimentation (110, 112) de telle sorte que les modules (10) de l'au moins une chaîne (30) de l'ensemble (103) transfèrent de l'énergie aux modules de la chaîne supplémentaire (114) par ledit même bus d'alimentation (110, 112), les convertisseurs DC/DC (15) des modules (10) de l'au moins une chaîne (30) de l'ensemble (103) et les convertisseurs DC/DC (15) des modules (30) de la chaîne supplémentaire (114) déchargeant et chargeant leur unité de stockage d'énergie (12) respectivement, lorsqu'une station de charge applique une tension à l'interface d'entrée (101).

12. Circuit (100) selon l'une quelconque revendication 10 ou 11, l'unité de contrôle (109) étant apte à piloter les interrupteurs des convertisseurs DC/DC (15) des modules (10) connectés à un même bus d'alimentation (110, 112) de telle sorte que les modules (10) de l'au moins une chaîne (30) de l'ensemble (103) transfèrent de l'énergie aux modules (10) de la chaîne supplémentaire (114) par ledit même bus d'alimentation (110, 112), les convertisseurs DC/DC (15) des modules (10) de l'au moins une chaîne (30) de l'ensemble (103) et les convertisseurs DC/DC (15) des modules (10) de la chaîne supplémentaire (114) déchargeant et chargeant leur unité de stockage d'énergie (12) respectivement, lorsque la machine électrique (102) fonctionne en générateur.

13. Circuit (100) selon l'une quelconque revendication 10 à 12, l'unité de contrôle (109) étant apte à piloter les interrupteurs des convertisseurs DC/DC (15) des modules (10) connectés à un même bus d'alimentation (110, 112) de telle sorte que les modules de la chaîne supplémentaire (114) transfèrent de l'énergie aux modules (10) de l'au moins une chaîne (30) de l'ensemble (103) par ledit même bus d'alimentation (110, 112), les convertisseurs DC/DC (15) des modules (10) de l'au moins une chaîne (30) et les convertisseurs DC/DC (15) des modules (10) de la chaîne supplémentaire (114) chargeant et déchargeant leur unité de stockage d'énergie (12) respectivement, lorsque la charge connectée au troisième bus d'alimentation (115) est inférieure à une valeur seuil prédéfinie ou nulle.

14. Circuit selon l'une quelconque des revendications 10 à 13, l'alimentation du troisième bus d'alimentation (115) depuis l'interface d'entrée (101) ou depuis les phases (102x, 102y, 102z) de la machine électrique tournante (102) s'effectuant exclusivement que par transfert d'énergie électrique via le premier bus d'alimentation (110) et/ou par transfert d'énergie électrique via le deuxième bus d'alimentation (112).

15. Circuit (100) selon l'une quelconque revendication 10 à 14, les unités de stockage d'énergie électrique (12) contenues dans les modules (10) de la chaîne supplémentaire (114) possédant une composition chimique, une taille et/ou une tension nominale différente par rapport aux unités de stockage d'énergie électrique (12) contenues dans les modules (10) de l'au moins une chaîne (30).
